# EUROPEAN PATENT APPLICATION

(11) **EP 4 703 080 A1**
(43) Date of publication of application: **04.03.2026**
(21) Application number: 25193121.8
(22) Date of filing: 31.07.2025
(51) Int. Cl.: B23K 26/20, H01M 50/103, H01M 50/169, B23K 103/10

(54) **METHOD FOR FABRICATING ELECTRICITY STORAGE DEVICE AND ELECTRICITY STORAGE DEVICE**

(30) Priority: 28.08.2024 JP 2024146065
(71) Applicant: Prime Planet Energy & Solutions, Inc., Chuo-ku, Tokyo 103-0022 (JP)
(72) Inventor: TAMURA, Kazuki, Tokyo, 103-0022 (JP)
(74) Representative: Kuhnen & Wacker Patent- und Rechtsanwaltsbüro PartG mbB

(57) **Abstract**

A method for fabricating an electricity storage device (10), the method comprising:
preparing a square case (11) (S01) including an opening (11d) ;
preparing a sealing plate (13) (S02) to be attached to the opening (11d) along an edge (11d1 to 11d4) of the opening (11d);
preparing assembly (S03) of attaching the sealing plate (13) to the opening (11d) of the case (11); and
performing main welding (S05) of laser welding the case (11) and the sealing plate (13) over an entire circumference of a periphery (13a) of the sealing plate (13), wherein
in the main welding (S05), laser welding over the entire circumference of the periphery (13a) of the sealing plate (13) is performed in at least four steps.

## Description

### BACKGROUND

The present disclosure relates to a method for fabricating an electricity storage device and a electricity storage device.

JP2013-187087A discloses a can seal welding method of a sealed battery for joining a lid to an opening of a battery case by welding. A portion of an inner side surface of the opening of the battery case has a step to which a lid is fitted. The lid is fitted to the opening of the battery case. In this welding method, laser welding starts from a joint at which the inner side surface with the step and the lid are joined. JP2013-187087A proposes that such a welding method can prevent laser leakage. The laser leakage refers to a phenomenon in which laser passes through a joint between a battery case and a lid and enters the inside of the battery case.

JP2013-187087A further discloses a can seal welding method of a sealed battery for separately performing welding on a front region and a rear region of the sealed battery. In this welding method, laser welding starts in a state where the lid in the front region of the sealed battery is pressed against the battery case downward by a pressing jig to weld the lid to the battery case in the rear region. Next, the pressing jig is removed, and the battery case in the front region of the battery case and the lid are welded. JP2013-187087A describes that such a welding method can prevent the lid from rising from the battery case during welding.

### SUMMARY

An inventor of the present disclosure intends to prevent laser leakage with a simple method.

A method for fabricating an electricity storage device disclosed here includes: preparing a square case including an opening; preparing a sealing plate to be attached to the opening along an edge of the opening; preparing assembly of attaching the sealing plate to the opening of the case; and performing main welding of laser welding the case and the sealing plate over an entire circumference of a periphery of the sealing plate. In the main welding, laser welding over the entire circumference of the periphery of the sealing plate is performed in at least four steps.

This fabrication method can prevent laser leakage with a simple method.

### BRIEF DESCRIPTION OF THE DRAWINGS

FIG. 1 is a perspective view schematically illustrating an electricity storage device.
FIG. 2 is a disassembled perspective view of the electricity storage device.
FIG. 3 is a flowchart showing an example of a method for fabricating an electricity storage device.
FIG. 4 is a plan view schematically illustrating a case and a sealing plate after a temporary welding step is finished.
FIG. 5 is an enlarged view schematically illustrating a boundary portion between a case and a sealing plate in a reference example.
FIG. 6 is an illustration for describing a main welding step according to one embodiment.
FIG. 7 schematically illustrates a vicinity of a start point of first laser welding.
FIG. 8 schematically illustrates a vicinity of a start point of second laser welding.
FIG. 9 schematically illustrates a vicinity of a start point of third laser welding.
FIG. 10 schematically illustrates a vicinity of a start point of fourth laser welding.
FIG. 11 is a plan view schematically illustrating a case and a sealing plate after a main welding step is finished.
FIG. 12 is an illustration for describing a main welding step according to another embodiment.
FIG. 13 is an illustration for describing a main welding step according to another embodiment.
FIG. 14 is an illustration for describing a main welding step according to another embodiment.
FIG. 15 is an illustration for describing a main welding step according to another embodiment.

### DETAILED DESCRIPTION

An embodiment of the technique disclosed here will be described hereinafter with reference to the drawings. The embodiment described herein is, of course, not intended to particularly limit the present disclosure. Each drawing is a schematic view and does not necessarily reflect an actual product. Members and parts having the same functions are denoted by the same reference numerals as appropriate, and description for the same members and parts will not be repeated as appropriate. Characters F, Rr, L, R, U, and D in the drawings represent front, rear, left, right, up, and down, respectively. Characters X, Y, and Z in the drawings represent front-rear directions, left-right directions, and top-bottom directions, respectively. The Y directions are orthogonal to the X directions. The Z directions are orthogonal to the X directions and the Y directions. It should be noted that these directions are defined merely for convenience of description, and do not limit the state of installation of the battery. An expression such as "X to Y" indicating a numerical range means "X or more and Y or less" unless otherwise specified.

An "electricity storage device" herein refers to a device capable of being charged and discharged. The electricity storage device includes batteries such as a lithium polymer battery and a nickel hydrogen battery as well as batteries generally called a lithium ion battery and a lithium secondary battery. The secondary battery generally refers to a battery capable of being repeatedly charged and discharged with movement of charge carriers between positive and negative electrodes. The electricity storage device may use an electrolyte or may use a solid electrolyte. For example, the secondary battery may be a secondary battery using a so-called liquid-based electrolyte, or a so-called all-solid-state battery using a solid electrolyte. The electricity storage device includes capacitors such as an electric double layer capacitor or a lithium ion capacitor.

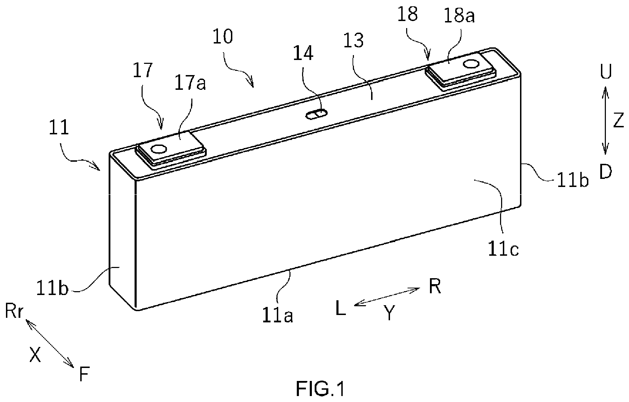

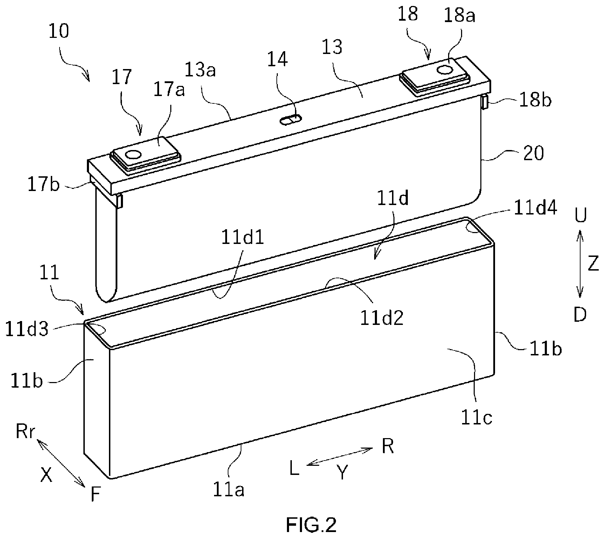

FIG. 1 is a perspective view schematically illustrating an electricity storage device 10. FIG. 2 is a disassembled perspective view of the electricity storage device 10. As illustrated in FIGS. 1 and 2, the electricity storage device 10 includes a case 11, a sealing plate 13, and an electrode body 20.

The case 11 is a square case of a substantially rectangular parallelepiped shape. The case 11 has short sides extending in the X directions and long sides extending in the Y directions when seen from above. The case 11 includes a bottom surface 11a, a pair of narrow surfaces 11b, and a pair of wide surfaces 11c. The bottom surface 11a extends in the X directions and the Y directions. The narrow surfaces 11b serving as a pair face each other in the Y directions. The pair of narrow surfaces 11b extends upward from both ends of the bottom surface 11a in the Y directions. The wide surfaces 11c serving as a pair face each other in the X directions. The pair of wide surfaces 11c extends upward from both ends of the bottom surface 11a in the X directions. The pair of narrow surfaces 11b and the pair of wide surfaces 11c constitute side surfaces of the case 11. From the viewpoint of obtaining light weight and required rigidity, the case 11 is made of, for example, aluminum or an aluminum alloy mainly containing aluminum.

As illustrated in FIG. 2, the case 11 has a rectangular opening 11d in an upper portion thereof. The opening 11d is surrounded by a rear edge 11d1, a front edge 11d2, a left edge 11d3, and a right edge 11d4. The rear edge 11d1 and the front edge 11d2 extend in the Y directions. The rear edge 11d1 is located rearward of the front edge 11d2. The left edge 11d3 and the right edge 11d4 extend in the X directions. The left edge 11d3 is located leftward of the right edge 11d4. The left edge 11d3 connects the left end of the rear edge 11d1 to the left end of the front edge 11d2. The right edge 11d4 connects the right end of the rear edge 11d1 to the rear end of the front edge 11d2. In the following description, the rear edge 11d1, the front edge 11d2, the left edge 11d3, and the right edge 11d4 will also be collectively referred to simply as "edges of the opening 11d."

The sealing plate 13 is a member that closes the opening 11d of the case 11. The sealing plate 13 is attached to the opening 11d of the case 11 along the edge of the opening 11d. In the state illustrated in FIG. 1, the sealing plate 13 is a rectangular flat plate. The sealing plate 13 may be made of the same material as the case 11. The sealing plate 13 may be made of, for example, aluminum or an aluminum alloy mainly containing aluminum.

The sealing plate 13 has a gas release valve 14 for emitting gas inside the case 11. The gas release valve 14 is located at the center of the sealing plate 13 in the Y directions. The gas release valve 14 is a thin portion designed to break when the internal pressure of the case 11 rises to a predetermined value or more. When the internal pressure of the case 11 exceeds the predetermined value, the gas release valve 14 breaks, causing the gas inside the case 11 to be emitted to the outside of the case 11.

The sealing plate 13 is provided with a pair of electrode terminals 17 and 18. The electrode terminals 17 and 18 as a pair are located at both ends of the sealing plate 13 in the Y directions. The method for attaching the electrode terminals 17 and 18 to the sealing plate 13 is not particularly limited. For example, the electrode terminals 17 and 18 may be attached to the sealing plate 13 using a crimping process. The electrode terminals 17 and 18 may be integrated with the sealing plate 13. The positive electrode terminal 17 includes an external terminal 17a and an internal terminal 17b. The external terminal 17a is attached to the upper side of the sealing plate 13. The internal terminal 17b is attached to the lower side of the sealing plate 13. Similarly, the electrode terminal 18 includes an external terminal 18a and an internal terminal 18b.

The electrode body 20 illustrated in FIG. 2 is accommodated inside the case 11 in the state illustrated in FIG. 1. Although not shown, the electrode body 20 includes a positive electrode and a negative electrode. The positive electrode of the electrode body 20 is connected to the internal terminal 17b of the electrode terminal 17. Thus, the electrode terminal 17 is a positive electrode terminal electrically connected to the positive electrode of the electrode body 20. The negative electrode of the electrode body 20 is connected to the internal terminal 18b of the electrode terminal 18. Thus, the electrode terminal 18 is a negative electrode electrically connected to the negative electrode of the electrode body 20. The electrode body 20 is not limited to a specific configuration. Various electrode bodies known to date may be used as the electrode body 20.

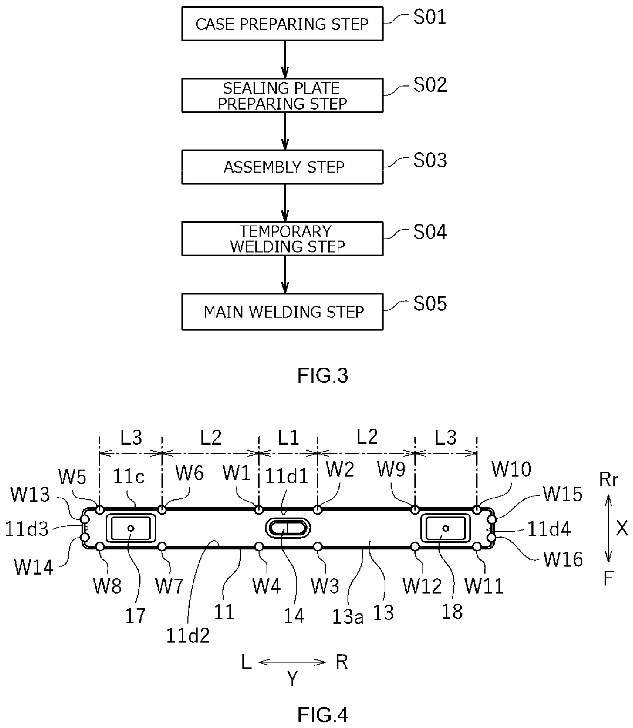

A method for fabricating the electricity storage device 10 will now be described. FIG. 3 is a flowchart showing an example of a method for fabricating the electricity storage device 10. The method for fabricating the electricity storage device 10 includes a case preparing step S01, a sealing plate preparing step S02, an assembly step S03, a temporary welding step S04, and a main welding step S05. The method for fabricating the electricity storage device 10 may include other steps, which will not be described here.

In the case preparing step S01, a square case 11 including the opening 11d is prepared. In the case preparing step S01, the method for preparing the case 11 is not particularly limited. The case 11 is prepared through molding by bending a single rectangular flat plate, for example. The case 11 prepared in the case preparing step S01 may have a width of 30 cm or more. The width of the case 11 herein refers to the length of the case 11 in the Y directions. By preparing such a relatively large case, a relatively large electrode body can be housed in the case 11, and thus, a high-capacity electricity storage device can be obtained.

In the sealing plate preparing step S02, a sealing plate 13 to be attached to an opening 11d of the case 11 along the edge of the opening 11d is prepared. In the sealing plate preparing step S02, the method for preparing the sealing plate 13 is not particularly limited. The sealing plate 13 is prepared by, for example, performing machining such as punching on a single rectangular flat plate and then attaching the electrode terminals 17 and 18 and other members to the plate. The sealing plate 13 may be prepared by integrally molding together with the electrode terminals 17 and 18 and other members. The sealing plate preparing step S02 may be performed before or after the case preparing step S01. The sealing plate preparing step S02 and the case preparing step S01 may be performed at the same time.

In the assembly step S03, as illustrated in FIG. 2, the electrode body 20 is connected to the electrode terminals 17 and 18. More specifically, the positive electrode of the electrode body 20 is connected to the internal terminal 17b of the electrode terminal 17, and the negative electrode of the electrode body 20 is connected to the internal terminal 18b of the electrode terminal 18. Then, in the assembly step S03, with the electrode body 20 connected to the electrode terminals 17 and 18, the sealing plate 13 is attached to the opening 11d of the case 11. Accordingly, the sealing plate 13 is attached to the opening 11d with the electrode body 20 accommodated inside the case 11.

In the temporary welding step S04, the case 11 and the sealing plate 13 are temporarily welded at a predetermined position on a boundary portion between the case 11 and the sealing plate 13. The temporary welding step S04 is performed with the sealing plate 13 attached to the opening 11d. The temporary welding is performed in order to position the sealing plate 13 relative to the case 11. In the temporary welding step S04, the case 11 and the sealing plate 13 are intermittently welded. A welding device used in the temporary welding step S04 may be the same as, or different from, the device used in the main welding step S05. In the temporary welding step S04, various welding devices known to date may be used.

FIG. 4 is a plan view schematically illustrating the case 11 and the sealing plate 13 after the temporary welding step S04 is finished. Characters W1 to W16 in FIG. 4 indicate temporarily welded portions formed by temporary welding. The temporarily welded portions W1 to W16 are portions where the case 11 and the sealing plate 13 are joined. In the state illustrated in FIG. 4, the case 11 and the sealing plate 13 are temporarily welded at a plurality of positions. Specifically, the case 11 and the sealing plate 13 are temporarily welded at predetermined 16 positions. The temporarily welded portions W1 to W12 are formed along the rear edge 11d1 or the front edge 11d2 of the opening 11d of the case 11. The temporarily welded portions W13 and W14 are formed along the left edge 11d3 of the opening 11d of the case 11. The temporarily welded portions W15 and W16 are formed along the right edge 11d4. In the state illustrated in FIG. 4, predetermined positions near the gas release valve 14 on the boundary between the case 11 and the sealing plate 13 are temporarily welded to form the temporarily welded portions W1 to W4. In the state illustrated in FIG. 4, predetermined positions near the electrode terminal 17 on the boundary between the case 11 and the sealing plate 13 are temporarily welded to form the temporarily welded portions W5 to W8. In the state illustrated in FIG. 4, predetermined positions near the electrode terminal 18 on the boundary between the case 11 and the sealing plate 13 are temporarily welded to form the temporarily welded portions W9 to W12. The positions of temporary welding and the number of the positions are not limited only to the state illustrated in FIG. 4, and can be changed as appropriate depending on dimensions of the case 11 and dimensions of the sealing plate 13, for example.

Character L1 in FIG. 4 indicates an interval between the temporarily welded portions W1 and W2. Character L2 in FIG. 4 indicates an interval between the temporarily welded portions W1 and W6. Character L3 in FIG. 4 indicates an interval between the temporarily welded portions W5 and W6. In the state illustrated in FIG. 4, the temporarily welded portions W1 to W16 are arranged symmetrically with respect to the X directions and the Y directions. Thus, the interval between the temporarily welded portions W3 and W4 is equal to the interval L1 between the temporarily welded portions W1 and W2. The interval between the temporarily welded portions W4 and W7, the interval between the temporarily welded portions W2 and W9, and the interval between the temporarily welded portions W3 and W12 are qual to the interval L2 between the temporarily welded portions W1 and W6. The interval between the temporarily welded portions W7 and W8, the interval between the temporarily welded portions W9 and W10, and the interval between the temporarily welded portions W11 and W12 are qual to the interval L3 between the temporarily welded portions W5 and W6.

In the state illustrated in FIG. 4, a relationship among the interval L1 between the temporarily welded portions W1 and W2, the interval L2 between the temporarily welded portions W1 and W6, and the interval L3 between the temporarily welded portions W5 and W6 is L2 > L3 = L1. That is, in the state illustrated in FIG. 4, the interval L1 between the temporarily welded portions W1 and W2 is equal to the interval L3 between the temporarily welded portions W5 and W6. The interval L2 between the temporarily welded portions W1 and W6 is longer than the interval L1 between the temporarily welded portions W1 and W2 and the interval L3 between the temporarily welded portions W5 and W6. Specifically, in the state illustrated in FIG. 4, L1 = 40 mm, L2 = 80 mm, and L3 = 40 mm. Accordingly, in the state illustrated in FIG. 4, the case 11 includes, along the edge of the opening 11d, four portions where the interval between the temporarily welded portions W1 to W16 is longer than 40 mm. The "portion where the interval between the temporarily welded portions W1 to W16 is longer than 40 mm" refers to a portion where the interval between two of the temporarily welded portions W1 to W16 is longer than a predetermined length. Although the "predetermined length" is 40 mm in this embodiment, the "predetermined length" may be changed as appropriate in accordance with a change in dimensions of the case 11, for example.

In the main welding step S05, the case 11 and the sealing plate 13 are main-welded. The main welding is performed to seal the opening 11d. In the main welding step S05, the case 11 and the sealing plate 13 are laser welded over the entire circumference of the periphery 13a of the sealing plate 13. In the main welding step S05, various laser welding devices known to date are used. For example, in the main welding step S05, a laser welding device using a fiber laser capable of oscillating continuously and other devices are preferably used.

If a gap occurs between the case 11 and the sealing plate 13, so-called laser leakage might occur during laser welding performed in the main welding step S05. The laser leakage refers to a phenomenon in which laser light passes through a gap between the case 11 and the sealing plate 13 and enters the inside of the case 11. The laser leakage can be a cause of a welding defect. In view of this, in the main welding step S05, laser welding is preferably performed to avoid occurrence of laser leakage. The inventor of the present disclosure intends to prevent laser leakage with a simple method. Thus, the inventor of the present disclosure conducted various studies on what welding conditions are likely to cause laser leakage. As a result, the inventor of the present disclosure has found the following issues.

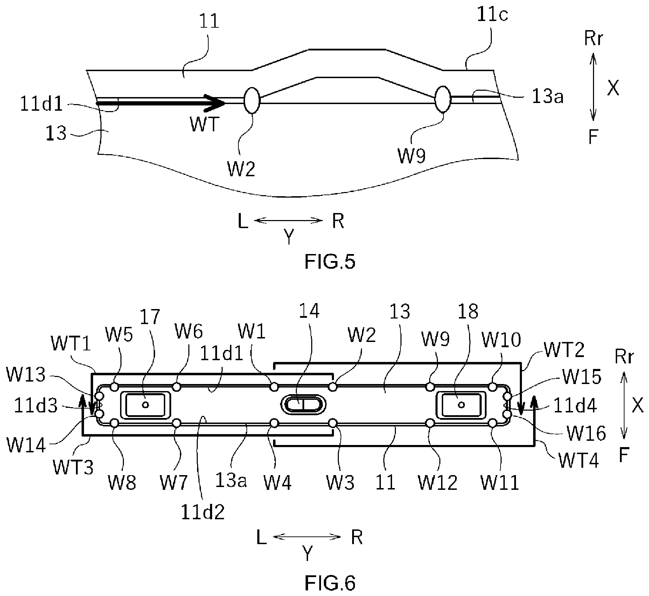

FIG. 5 is an enlarged view schematically illustrating a boundary portion between a case 11 and a sealing plate 13 in a reference example. FIG. 5 illustrates the case 11 and the sealing plate 13 when seen from above. The arrow indicated by character WT in FIG. 5 represents a welding path of laser welding. In the main welding step S05, since the temperature of the case 11 rises, the case 11 expands. When the case 11 expands, as illustrated in FIG. 5, the case 11 might deform outward to locally widen a gap between the case 11 and the sealing plate 13. The inventor of the present disclosure found that as the main welding step S05 progresses, the gap between the case 11 and the sealing plate 13 becomes wider, and laser leakage is more likely to occur. This is considered to be because the temperature of the case 11 rises as the main welding step S05 progresses. The inventor of the present disclosure also found that the gap between the case 11 and the sealing plate 13 is likely to be wide and laser leakage is especially likely to occur in portions where the interval between the temporarily welded portions W1 to W16 is relatively long. Specifically, according to the finding of the inventor of the present disclosure, laser leakage is likely to occur especially in portions where the interval between the temporarily welded portions W1 to W16 is 40 mm or more.

The inventor of the present disclosure further found that laser leakage is likely to occur especially in the case of fabricating a relatively large electricity storage device 10 in which the width of the case 11 is 30 cm or more. The inventor of the present disclosure considers this case as follows. When fabricating a relatively large electricity storage device 10, the dimensional tolerance of the case 11 and the sealing plate 13 tends to be large, which makes it likely for a relatively large gap to occur between the case 11 and the sealing plate 13. According to the finding of the inventor of the present disclosure, in a case where the width of the case 11 is about 30 cm, for example, a gap of about 0.2 mm can occur between the case 11 and the sealing plate 13. According to the finding of the inventor of the present disclosure, portions where the interval between the temporarily welded portions W1 to W16 is relatively long are likely to occur, and thus, portions where a gap between the case 11 and the sealing plate 13 tends to be wide are likely to occur in the main welding step S05.

In the method for fabricating the electricity storage device 10 disclosed here, in the main welding step S05, laser welding over the entire circumference of the periphery 13a of the sealing plate 13 is performed in at least four steps. In this embodiment, the case where laser welding is performed in four separate steps will be described. It should be noted that in the main welding step S05, laser welding may be performed in five or more separate steps.

FIG. 6 is an illustration for describing the main welding step S05 according to one embodiment. FIG. 6 illustrates the case 11 and the sealing plate 13 when seen from above. The arrow indicated by character WT1 in FIG. 6 represents a welding path of first laser welding. The arrow indicated by character WT2 represents a welding path of second laser welding. The arrow indicated by character WT3 represents a welding path of third laser welding. The arrow indicated by character WT4 represents a welding path of fourth laser welding.

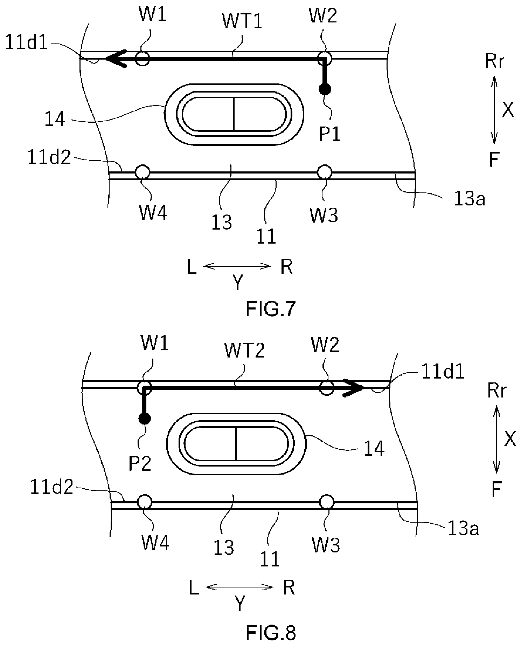

FIG. 7 schematically illustrates a vicinity of a start point of first laser welding. In FIG. 7, a start point of the first laser welding is indicated by character P1. In the following description, the start point of the first laser welding will also be simply referred to as a start point P1. In the state illustrated in FIG. 7, the start point P1 is set inward of the periphery 13a of the sealing plate 13. Specifically, the start point P1 is set at a position identical to the temporarily welded portion W2 with respect to the Y directions and forward of the temporarily welded portion W2 with respect to the X directions. The start point P1 may be set at a position away from the temporarily welded portion W2 by about 0.5 mm to about 1.5 mm in the X directions, for example. It should be noted that the position of the start point P1 may be changed as appropriate depending on conditions such as an output value of a laser used for laser welding, a material for the sealing plate 13, and a welding speed.

In the first laser welding, welding is performed along the welding path WT1 illustrated in FIG. 6. As illustrated in FIG. 7, in the first laser welding, first, laser welding is performed from the start point P1 toward the temporarily welded portion W2. When the welding position of laser welding reaches the temporarily welded portion W2, laser welding is then performed along the periphery 13a of the sealing plate 13. In the state illustrated in FIG. 7, laser welding is performed leftward from the temporarily welded portion W2. The end point of the first laser welding is set at a position at which the temporarily welded portion W14 is formed. In the first laser welding, as illustrated in FIG. 6, laser welding is performed to the temporarily welded portion W14 by way of the temporarily welded portions W1, W6, W5, and W13. When the welding position of laser welding reaches the temporarily welded portion W14, the first laser welding is finished. Accordingly, in the first laser welding, mainly a left half of the rear edge 11d1 and a rear half of the left edge 11d3 of the opening 11d of the case 11 are welded to the periphery 13a of the sealing plate 13.

When the first laser welding is finished, second laser welding is then performed. The time from the end of the first laser welding to the start of the second laser welding is not particularly limited. The second laser welding may start about 4 seconds to about 10 seconds or may start about 5 seconds to about 9 seconds after the first laser welding is finished. In this embodiment, the second laser welding starts 7 seconds after the first laser welding is finished.

FIG. 8 schematically illustrates a vicinity of a start point of the second laser welding. In FIG. 8, the start point of the second laser welding is indicated by character P2. In the following description, the start point of the second laser welding will also be simply referred to as a start point P2. In the state illustrated in FIG. 8, the start point P2 is set inward of the periphery 13a of the sealing plate 13. Specifically, the start point P2 is set at a position identical to the temporarily welded portion W1 with respect to the Y directions and forward of the temporarily welded portion W1 with respect to the X directions. The start point P2 may be set at a position away from the temporarily welded portion W1 by about 0.5 mm to about 1.5 mm in the X directions, for example. It should be noted that the position of the start point P2 may be changed as appropriate depending on conditions such as the output value of the laser used for laser welding, the material for the sealing plate 13, and the welding speed.

In the second laser welding, welding is performed along the welding path WT2 illustrated in FIG. 6. As illustrated in FIG. 8, in the second laser welding, first, laser welding is performed from the start point P2 toward the temporarily welded portion W1. When the welding position of laser welding reaches the temporarily welded portion W1, laser welding is then performed along the periphery 13a of the sealing plate 13. In the state illustrated in FIG. 8, laser welding is performed rightward from the temporarily welded portion W1. The end point of the second laser welding is set at a position at which the temporarily welded portion W16 is formed. In the second laser welding, as illustrated in FIG. 6, laser welding is performed to the temporarily welded portion W16 by way of the temporarily welded portions W2, W9, W10, and W15. When the welding position of laser welding reaches the temporarily welded portion W16, the second laser welding is finished. Accordingly, in the second laser welding, mainly a right half of the rear edge 11d1 and a rear half of the right edge 11d4 of the opening 11d of the case 11 are welded to the periphery 13a of the sealing plate 13.

When the second laser welding is finished, third laser welding is then performed. The time from the end of the second laser welding to the start of the third laser welding is not particularly limited. The time from the end of the second laser welding to the start of the third laser welding may be equal to the time from the end of the first laser welding to the start of the second laser welding. The third laser welding may start about 4 seconds to about 10 seconds or may start about 5 seconds to about 9 seconds after the second laser welding is finished. In this embodiment, the third laser welding starts 7 seconds after the second laser welding is finished.

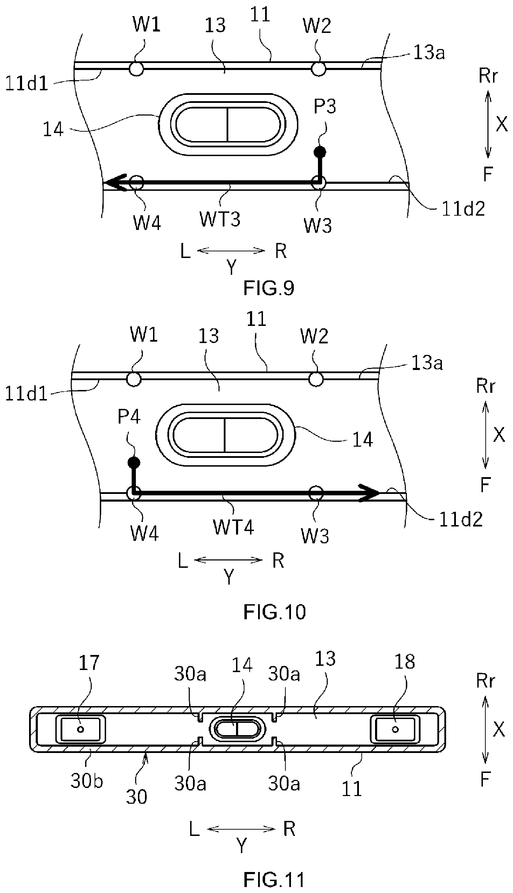

FIG. 9 schematically illustrates a vicinity of a start point of the third laser welding. In FIG. 9, the start point of the third laser welding is indicated by character P3. In the following description, the start point of the third laser welding will also be simply referred to as a start point P3. In the state illustrated in FIG. 9, the start point P3 is set inward of the periphery 13a of the sealing plate 13. Specifically, the start point P3 is set at a position identical to the temporarily welded portion W3 with respect to the Y directions and rearward of the temporarily welded portion W3 with respect to the X directions. The start point P3 may be set at a position away from the temporarily welded portion W3 by about 0.5 mm to about 1.5 mm in the X directions, for example. It should be noted that the position of the start point P3 may be changed as appropriate depending on conditions such as the output value of the laser used for laser welding, the material for the sealing plate 13, and the welding speed.

In the third laser welding, welding is performed along the welding path WT3 illustrated in FIG. 6. As illustrated in FIG. 9, in the third laser welding, first, laser welding is performed from the start point P3 toward the temporarily welded portion W3. When the welding position of laser welding reaches the temporarily welded portion W3, laser welding is then performed along the periphery 13a of the sealing plate 13. In the state illustrated in FIG. 9, laser welding is performed leftward from the temporarily welded portion W3. The end point of the third laser welding is set at a position at which the temporarily welded portion W13 is formed. In the third laser welding, as illustrated in FIG. 6, laser welding is performed to the temporarily welded portion W13 by way of the temporarily welded portions W4, W7, W8, and W14. When the welding position of laser welding reaches the temporarily welded portion W13, the third laser welding is finished. Accordingly, in the third laser welding, mainly a left half of the front edge 11d2 and a front half of the left edge 11d3 of the opening 11d of the case 11 are welded to the periphery 13a of the sealing plate 13.

When the third laser welding is finished, fourth laser welding is then performed. The time from the end of the third laser welding to the start of the fourth laser welding is not particularly limited. The time from the end of the third laser welding to the start of the fourth laser welding may be equal to the time from the end of the first laser welding to the start of the second laser welding. The fourth laser welding may start about 4 seconds to about 10 seconds or may start about 5 seconds to about 9 seconds after the third laser welding is finished, for example. In this embodiment, the fourth laser welding starts 7 seconds after the third laser welding is finished.

FIG. 10 schematically illustrates a vicinity of a start point of the fourth laser welding. In FIG. 10, the start point of the fourth laser welding is indicated by character P4. In the following description, the start point of the fourth laser welding will also be simply referred to as a start point P4. In the state illustrated in FIG. 10, the start point P4 is set inward of the periphery 13a of the sealing plate 13. Specifically, the start point P4 is set at a position identical to the temporarily welded portion W4 with respect to the Y directions and rearward of the temporarily welded portion W4 with respect to the X directions. The start point P4 may be set at a position away from the temporarily welded portion W4 by about 0.5 mm to about 1.5 mm in the X directions, for example. It should be noted that the position of the start point P4 may be changed as appropriate depending on conditions such as the output value of the laser used for laser welding, the material for the sealing plate 13, and the welding speed.

In the fourth laser welding, welding is performed along the welding path WT4 illustrated in FIG. 6. As illustrated in FIG. 10, in the fourth laser welding, first, laser welding is performed from the start point P4 toward the temporarily welded portion W4. When the welding position of laser welding reaches the temporarily welded portion W4, laser welding is then performed along the periphery 13a of the sealing plate 13. In the state illustrated in FIG. 10, laser welding is performed rightward from the temporarily welded portion W4. The end point of the fourth laser welding is set at a position at which the temporarily welded portion W15 is formed. In the fourth laser welding, as illustrated in FIG. 6, laser welding is performed to the temporarily welded portion W15 by way of the temporarily welded portions W3, W12, W11, and W16. When the welding position of laser welding reaches the temporarily welded portion W15, the fourth laser welding is finished. Accordingly, in the fourth laser welding, mainly a right half of the front edge 11d2 and a front half of the right edge 11d4 of the opening 11d of the case 11 are welded to the periphery 13a of the sealing plate 13.

The main welding step S05 is completed by the completion of the fourth laser welding. When the main welding step S05 is finished, the case 11 and the sealing plate 13 are welded over the entire circumference of the periphery 13a of the sealing plate 13. In this manner, the inside of the case 11 is sealed. When the main welding step S05 is finished, an injection step of injecting an electrolyte into the case 11, an aging step of charging the electricity storage device 10 and leaving the electricity storage device 10 for a predetermined time, an inspection step of inspecting an internal short circuit or the like in the electricity storage device 10, and other steps are performed as appropriate, and the electricity storage device 10 is fabricated.

FIG. 11 is a plan view schematically illustrating the case 11 and the sealing plate 13 after the main welding step S05 is finished. In FIG. 11, the hatched portion indicates a welded mark 30 formed by laser welding performed in the main welding step S05. FIG. 11 shows the welded mark 30 in an enlarged manner. The welded mark 30 is formed over the entire circumference of the periphery 13a of the sealing plate 13. The welded mark 30 includes four inner projecting portions 30a and a body portion 30b. As illustrated in FIG. 11, the portion 30b has an annular shape along the entire circumference of the periphery 13a of the sealing plate 13. The inner projecting portions 30a projects from the body portion 30b. The inner projecting portions 30a projects inward relative to the periphery 13a of the sealing plate 13. The inner projecting portions 30a is formed by starting each of the first laser welding through the fourth laser welding from a position inward of the periphery 13a of the sealing plate 13.

As described above, according to the finding of the inventor of the present disclosure, as the main welding step S05 progresses, the temperature of the case 11 rises. Thus, a gap between the case 11 and the sealing plate 13 becomes wider, and laser leakage is more likely to occur. Accordingly, in the main welding step S05, if laser leakage over the entire circumference of the periphery 13a of the sealing plate 13 is performed in a single step, laser leakage is likely to occur. However, in the method for fabricating the electricity storage device 10 according to this embodiment, in the main welding step S05, laser welding over the entire circumference of the periphery 13a of the sealing plate 13 is performed in four steps. Accordingly, as compared to the case where laser welding over the entire circumference of the periphery 13a of the sealing plate 13 is performed in a single step, main welding can be performed with a temperature rise of the case 11 suppressed, and thus, occurrence of laser leakage can be prevented.

In this embodiment, the method for fabricating the electricity storage device 10 includes the temporary welding step S04 of temporarily welding the case 11 and the sealing plate 13 at a predetermined position on a boundary portion between the case 11 and the sealing plate 13. Accordingly, main welding is performed in the main welding step S05 in the state where the sealing plate 13 is positioned relative to the case 11. Thus, the positional relationship between the sealing plate 13 and the case 11 is less likely to be shifted.

Specifically, in this embodiment, in the temporary welding step S04, predetermined positions near the gas release valve 14 are temporarily welded. Accordingly, main welding can be performed with a portion near the gas release valve 14 is fixed, and thus, the position of the gas release valve 14 is less likely to be shifted after the main welding. In addition, in this embodiment, in the temporary welding step S04, predetermined positions near the electrode terminals 17 and 18 are temporarily welded. Accordingly, main welding can be performed with portions near the electrode terminals 17 and 18 fixed, and thus, the positions of the electrode terminals 17 and 18 are less likely to be shifted after the main welding.

As described above, according to the finding of the inventor of the present disclosure, a gap between the case 11 and the sealing plate 13 tends to be wide, and laser leakage occurs especially in portions where the interval between the temporarily welded portions W1 to W16 is longer than 40 mm. In the state illustrated in FIG. 6, the interval between the temporarily welded portions W1 and W6, the interval between the temporarily welded portions W2 and W9, the interval between the temporarily welded portions W4 and W7, the interval between the temporarily welded portions W3 and W12 are 80 mm, and the case 11 includes four portions where the interval between the temporarily welded portions W1 to W16 is longer than 40 mm. In view of this, in this embodiment, in the main welding step S05, the four portions where the interval between the temporarily welded portions W1 to W16 is longer than 40 mm are welded in different steps. Specifically, in first laser welding, a portion between the temporarily welded portions W1 and W6 is welded. In second laser welding, a portion between the temporarily welded portions W2 and W9 is welded. In third laser welding, a portion between the temporarily welded portions W4 and W7 is welded. In fourth laser welding, a portion between the temporarily welded portions W3 and W12 is welded. In this manner, the portions where the interval between the temporarily welded portions W1 to W16 is relatively large are welded in difference steps so that widening of a gap can also be suppressed in a portion where a gap between the case 11 and the sealing plate 13 tends to be wide, and thus, laser leakage is less likely to occur.

In the main welding step S05 of this embodiment, a start section and an end section of the welding paths WT1 to WT4 in each step of laser welding performed in four steps overlap with a start section and an end section of the welding paths WT1 to WT4 in another step of laser welding. The start section herein is, for example, a section between the start points P1 to P4 to the temporarily welded portions W1 to W16 second closest to the start points P1 to P4 on each of the welding paths WT1 to WT4. The end section herein is, for example, a section between the end point and the temporarily welded portions W1 to W16 closest to the end point on each of the welding paths WT1 to WT4.

Specifically, in the state illustrated in FIG. 6, the start section of the first laser welding is a section between the start point P1 and the temporarily welded portion W1 on the welding path WT1. The end section of the first laser welding is a section between the temporarily welded portion W13 and the temporarily welded portion W14 on the welding path WT1. The start section of the second laser welding is a section between the start point P2 and the temporarily welded portion W2 on the welding path WT2. The end section of the second laser welding is a section between the temporarily welded portion W15 and the temporarily welded portion W16 on the welding path WT2. The start section of the third laser welding is a section between the start point P3 and the temporarily welded portion W4 on the welding path WT3. The end section of the third laser welding is a section between the temporarily welded portion W13 and the temporarily welded portion W14 on the welding path WT3. The start section of the fourth laser welding is a section between the start point P4 and the temporarily welded portion W3 on the welding path WT4. The end section of the fourth laser welding is a section between the temporarily welded portion W15 and the temporarily welded portion W16 on the welding path WT4.

In the state illustrated in FIG. 6, the start section of the first laser welding overlaps with the start section of the second laser welding. The end section of the first laser welding overlaps with the end section of the third laser welding. The end section of the second laser welding overlaps with the end section of the fourth laser welding. The start section of the third laser welding overlaps with the start section of the fourth laser welding. Accordingly, the start sections and the end sections overlap with each other on the welding paths WT1 to WT4 in the steps, and thus, welding over the entire circumference of the periphery 13a of the sealing plate 13 can be performed without omission.

In the main welding step S05 of the this embodiment, each of the start points P2 to P4 of laser welding performed in the second and subsequent steps is set at a position away from the end point of laser welding in the immediately preceding step. The "position away from a position" refers to a position away from the position by a distance of one third or more of the width of the case 11. Specifically, in the state illustrated in FIG. 6, the start point P2 is located away from a position at which the temporarily welded portion W14 as the end point of the first laser welding is formed, by a distance of one third or more of the width of the case 11. The start point P3 is located away from a position at which the temporarily welded portion W16 as the end point of the second laser welding is formed, by a distance of one third or more of the width of the case 11. The start point P4 is located away from a position at which the temporarily welded portion W13 as the end point of the third laser welding is formed, by a distance of one third or more of the width of the case 11. Accordingly, in the laser welding in each step, laser welding starts from a position where the temperature has not relatively increased, and thus, occurrence of laser leakage can be effectively prevented.

In the main welding step S05 of this embodiment, laser welding performed in the second or subsequent step starts 4 seconds to 10 seconds after laser welding in the immediately preceding step is finished. Specifically, in this embodiment, laser welding performed in the second or subsequent step starts 7 seconds after laser welding in the immediately preceding step is finished. Accordingly, laser welding starts from a state where the temperature of the case 11 has been lowered to some extent, and thus, occurrence of laser leakage can be effectively prevented.

The inventor of the present disclosure also found that laser leakage can also occur immediately after laser welding starts. The inventor of the present disclosure considers this case as follows. As laser welding progresses, the temperature of the case 11 and the sealing plate 13 rises, and the case 11 and the sealing plate 13 become more likely to melt. Accordingly, as laser welding progresses, a molten pool becomes more likely to be formed. This molten pool enters a gap between the case 11 and the sealing plate 13 to fill the gap, thereby making it less likely to cause laser leakage. On the other hand, immediately after laser welding starts, the temperature of the case 11 and the sealing plate 13 is not sufficiently increased, and a molten pool is not easily formed. Thus, it is considered that laser leakage might also occur immediately after laser welding starts.

However, in the main welding step S05 of this embodiment, the start points P1 to P4 of the welding paths WT1 to WT4 in each step of laser welding performed in at least four steps are set inward of the periphery 13a of the sealing plate 13. Accordingly, even immediately after laser welding starts, the temperature of the sealing plate 13 is easily increased, and a molten pool is likely to be formed. This can also prevent occurrence of laser leakage immediately after laser welding starts.

As described above, according to the finding of the inventor of the present disclosure, laser leakage is likely to occur especially in the case of fabricating a relatively large electricity storage device 10 in which the width of the case 11 is 30 cm or more. This is because in the relatively large electricity storage device 10, a relatively wide gap is likely to occur between the case 11 and the sealing plate 13, and the gap between the case 11 and the sealing plate 13 is likely to be widened in the main welding step S05. However, in the fabrication method according to this embodiment, main welding is performed while suppressing a temperature rise of the case 11 even in a latter half of the main welding step S05 in which the temperature of the case 11 is likely to rise, and thus, laser leakage can be prevented. Accordingly, the fabrication method according to this embodiment can be effectively used particularly in fabricating the relatively large electricity storage device 10.

One embodiment of the technique proposed here has been described above. The embodiment described above, however, is merely an example, and the present disclosure can be carried out in other modes.

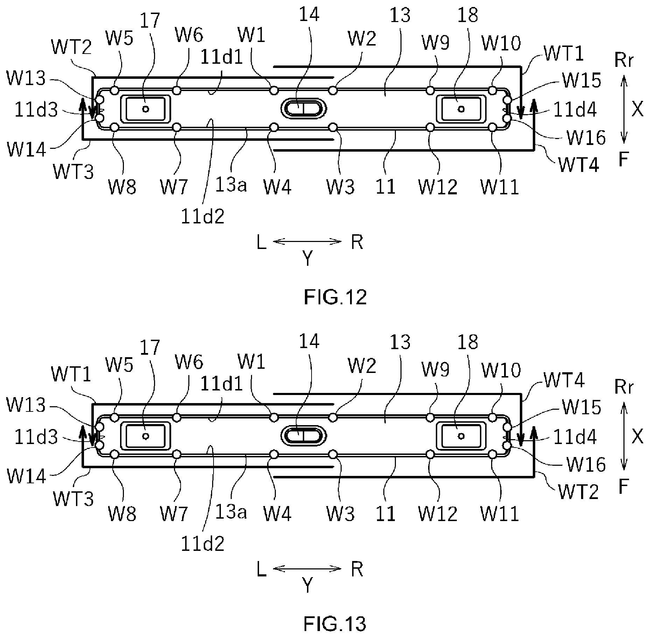

FIGS. 12 through 15 are illustrations for describing a main welding step S05 according to another embodiment. In the states illustrated in FIGS. 12 through 15, for the sake of simplicity, description will be given on a case where a start point of a welding path in each step of laser welding is set on the periphery 13a of the sealing plate 13. It should be noted that the start point of the welding path in each step of laser welding may be set inward of the periphery 13a of the sealing plate 13, in a manner similar to the state illustrated in FIG. 6.

In the state illustrated in FIG. 12, in first laser welding, as indicated by character WT1, laser welding starts from the temporarily welded portion W1, and then is performed to the temporarily welded portion W16 by way of the temporarily welded portions W2, W9, W10, and W15. In second laser welding, as indicated by character WT2, laser welding starts from the temporarily welded portion W2, and then is performed to the temporarily welded portion W14 by way of the temporarily welded portions W1, W6, W5, and W13. In third laser welding, as indicated by character WT3, laser welding starts from the temporarily welded portion W3, and then is performed to the temporarily welded portion W13 by way of the temporarily welded portions W4, W7, W8, and W14. In fourth laser welding, as indicated by character WT4, laser welding starts from the temporarily welded portion W4, and then is performed to the temporarily welded portion W15 by way of the temporarily welded portions W3, W12, W11, and W16. Thus, in the state illustrated in FIG. 12, as compared to the state illustrated in FIG. 6, main welding is performed with the welding path WT1 of the first laser welding and the welding path WT2 of the second laser welding replaced by each other.

In the state illustrated in FIG. 13, in the first laser welding, as indicated by character WT1, laser welding starts from the temporarily welded portion W2, and is then performed to the temporarily welded portion W14 by way of the temporarily welded portions W1, W6, W5, and W13. In second laser welding, as indicated by character WT2, laser welding starts from the temporarily welded portion W4, and then is performed to the temporarily welded portion W15 by way of the temporarily welded portions W3, W12, W11, and W16. In third laser welding, as indicated by character WT3, laser welding starts from the temporarily welded portion W3, and then is performed to the temporarily welded portion W13 by way of the temporarily welded portions W4, W7, W8, and W14. In fourth laser welding, as indicated by character WT4, laser welding starts from the temporarily welded portion W1, and then is performed to the temporarily welded portion W16 by way of the temporarily welded portions W2, W9, W10, and W15. Thus, in the state illustrated in FIG. 13, as compared to the state illustrated in FIG. 6, main welding is performed with the welding path WT2 of the second laser welding and the welding path WT4 of the fourth laser welding replaced by each other.

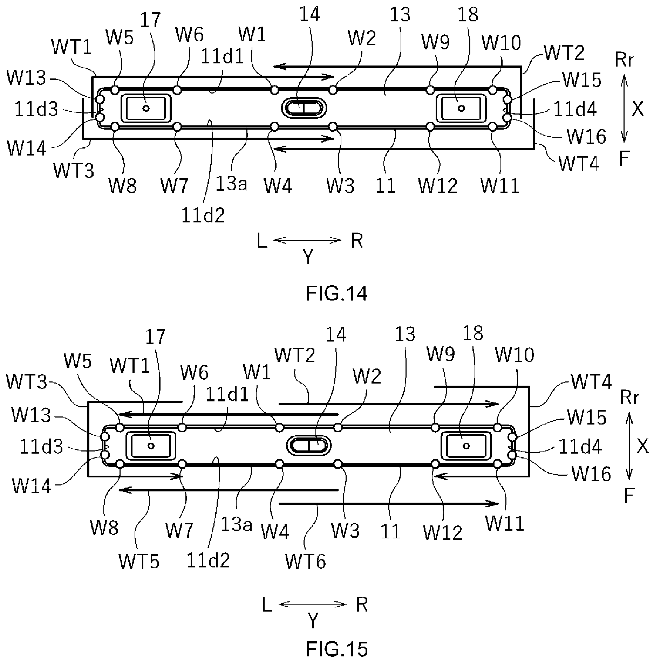

In the state illustrated in FIG. 14, in the first laser welding, as indicated by character WT1, laser welding starts from the temporarily welded portion W14, and is then performed to the temporarily welded portion W2 by way of the temporarily welded portions W13, W5, W6, and W1. In second laser welding, as indicated by character WT2, laser welding starts from the temporarily welded portion W16, and then is performed to the temporarily welded portion W1 by way of the temporarily welded portions W15, W10, W9, and W2. In third laser welding, as indicated by character WT3, laser welding starts from the temporarily welded portion W13, and then is performed to the temporarily welded portion W3 by way of the temporarily welded portions W14, W8, W7, and W4. In fourth laser welding, as indicated by character WT4, laser welding starts from the temporarily welded portion W15, and then is performed to the temporarily welded portion W4 by way of the temporarily welded portions W16, W11, W12, and W3. Thus, in the state illustrated in FIG. 14, as compared to the state illustrated in FIG. 6, welding is performed in each step with the progress direction of the welding paths WT1 to WT4 in each step reversed.

In the state illustrated in FIG. 15, laser welding is performed in six steps in the main welding step S05. Arrows indicated by character WT1 to WT4 in FIG. 15 represent welding paths of laser welding performed in the first through fourth steps. The arrow indicated by character WT5 represents a welding path of fifth laser welding. The arrow indicated by character WT6 represents a welding path of sixth laser welding.

In the state illustrated in FIG. 15, in the first laser welding, as indicated by character WT1, laser welding starts from the temporarily welded portion W2, and is then performed to the temporarily welded portion W5 by way of the temporarily welded portions W1 and W6. In second laser welding, as indicated by character WT2, laser welding starts from the temporarily welded portion W1, and then is performed to the temporarily welded portion W10 by way of the temporarily welded portions W2 and W9. In third laser welding, as indicated by character WT3, laser welding starts from the temporarily welded portion W6, and then is performed to the temporarily welded portion W7 by way of the temporarily welded portions W5, W13, W14, and W8. In fourth laser welding, as indicated by character WT4, laser welding starts from the temporarily welded portion W9, and then is performed to the temporarily welded portion W12 by way of the temporarily welded portions W10, W15, W16, and W11. In fifth laser welding, as indicated by character WT5, laser welding starts from the temporarily welded portion W3, and then is performed to the temporarily welded portion W8 by way of the temporarily welded portions W4 and W7. In sixth laser welding, as indicated by character WT6, laser welding starts from the temporarily welded portion W4, and then is performed to the temporarily welded portion W11 by way of the temporarily welded portions W3 and W12.

The method for fabricating the electricity storage device 10 may include steps other than the steps described above. For example, the method for fabricating the electricity storage device 10 may include a clamping step of pressing the case 11 against the sealing plate 13 before the main welding step S05. This can further suppress occurrence of laser leakage. Similarly, the method for fabricating the electricity storage device 10 may also include a clamping step before the temporary welding step S04.

The technique disclosed here has been described in details. Unless otherwise specified, the embodiment and other examples mentioned herein do not limit the present disclosure. The technique disclosed here can be modified in various ways, and the constituent elements and the processes described here can be appropriately omitted or appropriately combined unless no particular problems arise. The specification includes the disclosures described in the following items.

Item 1:
A method for fabricating an electricity storage device includes:
   preparing a square case including an opening;
   preparing a sealing plate to be attached to the opening along an edge of the opening;
   preparing assembly of attaching the sealing plate to the opening of the case; and
   performing main welding of laser welding the case and the sealing plate over an entire circumference of a periphery of the sealing plate, wherein
   in the main welding, laser welding over the entire circumference of the periphery of the sealing plate is performed in at least four steps.
Item 2:
   The method of Item 1 further includes performing temporary welding of temporarily welding the case and the sealing plate at a predetermined position on a boundary portion between the case and the sealing plate.
Item 3: In the fabrication method of Item 2
   an electrode terminal is located on the sealing plate prepared in the preparing the sealing plate, and
   in the temporary welding, predetermined positions near the electrode terminal on the boundary portion between the case and the sealing plate are temporarily welded.
Item 4: In the fabrication method of Item 2 or 3,
   the sealing plate prepared in the preparing the sealing plate includes a gas release valve that releases gas inside the case, and
   in the temporary welding, predetermined positions near the gas release valve on the boundary portion between the case and the sealing plate are temporarily welded.
Item 5: In the fabrication method of any one of Items 2 to 4,
   in the temporary welding, the case and the sealing plate are temporarily welded at a plurality of positions,
   the case temporarily welded to the sealing plate in the temporary welding includes, along the edge of the opening, a plurality of portions where an interval between temporarily welded portions formed by the temporary welding is longer than a predetermined length, and
   in the main welding, the plurality of portions where the interval between the temporarily welded portions is longer than the predetermined length are welded in different steps.
Item 6: In the fabrication method of any one of Items 1 to 5,
   in the main welding, a start section and an end section of a welding path in each step of laser welding performed at least four steps overlap with one of a start section and an end section of a welding path in another step.
Item 7: In the fabrication method of any one of Items 1 to 6,
   in the main welding, a start point of laser welding performed in a second or subsequent step is set at a position away from an end point of laser welding performed in an immediately preceding step.
Item 8: In the fabrication method of any one of Items 1 to 7,
   in the main welding, laser welding performed in a second or subsequent step starts 4 seconds to 10 seconds after laser welding in an immediately preceding step is finished.
Item 9: In the fabrication method of any one of Items 1 to 8,
   the case prepared in the preparing the case has a width of 30 cm or more.
Item 10: In the fabrication method of any one of Items 1 to 9,
   in the main welding, a start point of a welding path of laser welding performed in at least four steps is set inward of the periphery of the sealing plate.
Item 11: In an electricity storage device obtained by the fabrication method of Item 10,
   a welded mark is formed over an entire circumference of the periphery of the sealing plate, and
   the welded mark includes an inner projecting portion projecting inward relative to the periphery of the sealing plate.

## Claims

1. A method for fabricating an electricity storage device (10), the method comprising:
preparing a square case (11) (S01) including an opening (11d);
preparing a sealing plate (13) (S02) to be attached to the opening (11d) along an edge (11d1 to 11d4) of the opening (11d);
preparing assembly (S03) of attaching the sealing plate (13) to the opening (11d) of the case (11); and
performing main welding (S05) of laser welding the case (11) and the sealing plate (13) over an entire circumference of a periphery (13a) of the sealing plate (13), wherein
in the main welding (S05), laser welding over the entire circumference of the periphery (13a) of the sealing plate (13) is performed in at least four steps.

2. The method according to claim 1, further comprising performing temporary welding (S04) of temporarily welding the case (11) and the sealing plate (13) at a predetermined position on a boundary portion between the case (11) and the sealing plate (13).

3. The method according to claim 2, wherein
an electrode terminal (17,18) is located on the sealing plate (13) prepared in the preparing the sealing plate (13) (S02), and
in the temporary welding (S04), predetermined positions near the electrode terminal (17,18) on the boundary portion between the case (11) and the sealing plate (13) are temporarily welded.

4. The method according to claim 2 or 3, wherein
the sealing plate (13) prepared in the preparing the sealing plate (13) (S02) includes a gas release valve (14) that releases gas inside the case (11), and
in the temporary welding (S04), predetermined positions near the gas release valve (14) on the boundary portion between the case (11) and the sealing plate (13) are temporarily welded.

5. The method according to any one of claims 2 to 4, wherein
in the temporary welding (S04), the case (11) and the sealing plate (13) are temporarily welded at a plurality of positions,
the case (11) temporarily welded to the sealing plate (13) in the temporary welding (S04) includes, along the edge (11d1 to 11d4) of the opening (11d), a plurality of portions where an interval (L1 to L3) between temporarily welded portions (W1 to W16) formed by the temporary welding is longer than a predetermined length, and
in the main welding (S05), the plurality of portions where the interval (L1 to L3) between the temporarily welded portions (W1 to W16) is longer than the predetermined length are welded in different steps.

6. The method according to any one of claims 1 to 5, wherein
in the main welding (S05), a start section and an end section of a welding path (WT1 to WT4) in each step of laser welding performed at least four steps overlap with one of a start section and an end section of a welding path (WT1 to WT4) in another step.

7. The method according to any one of claims 1 to 6, wherein
in the main welding (S05), a start point (P1 to P4) of laser welding performed in a second or subsequent step is set at a position away from an end point of laser welding performed in an immediately preceding step.

8. The method according to any one of claim 1 to 7, wherein
in the main welding (S05), laser welding performed in a second or subsequent step starts 4 seconds to 10 seconds after laser welding in an immediately preceding step is finished.

9. The method according to any one of claims 1 to 8, wherein the case (11) prepared in the preparing the case (11) (S01) has a width of 30 cm or more.

10. The method according to any one of claims 1 to 9, wherein
in the main welding (S05), a start point (P1 to P4) of a welding path (WT1 to WT4) of laser welding performed in at least four steps is set inward of the periphery (13a) of the sealing plate (13).

11. An electricity storage device (10) obtained by the method according to claim 10, wherein
a welded mark (30) is formed over an entire circumference of the periphery (13a) of the sealing plate (13), and
the welded mark (30) includes an inner projecting portion (30a) projecting inward relative to the periphery (13a) of the sealing plate (13).
